(19) Europäisches Patentamt
European Patent Office
Office européen des brevets

(11) **EP 2 809 061 A1**

(12) **EUROPEAN PATENT APPLICATION**

(43) Date of publication:
**03.12.2014 Bulletin 2014/49**

(51) Int Cl.:
*H04N 5/225* (2006.01)  *H04N 17/00* (2006.01)

(21) Application number: **13169342.6**

(22) Date of filing: **27.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Axis AB**
**223 69 Lund (SE)**

(72) Inventor: **Johansson, Filip**
**214 36 Malmö (SE)**

(74) Representative: **Åkesson, Sten Jan-Åke**
**Awapatent AB**
**Box 1066**
**251 10 Helsingborg (SE)**

(54) **Image sensor positioning method and system**

(57) The present invention relates to a method (600) for positioning an image sensor (108, 208, 308, 408, 508) within a camera housing (106), the method comprising: illuminating (602) the image sensor (108, 208, 308, 408, 508) with light representing a diffraction pattern (200, 300, 400, 500), acquiring (604) by means of the image sensor (108, 208, 308, 408, 508) the diffraction pattern (200, 300, 400, 500), analyzing (606) a position and a shape of the diffraction pattern (200, 300, 400, 500) on the image sensor (108, 208, 308, 408, 508), adjusting (608) the position of the image sensor (108, 208, 308, 408, 508) in relation to the camera housing (106) based on the position and the shape of the diffraction pattern (200, 300, 400, 500) on the image sensor (108, 208, 308, 408, 508) such that a desired position and shape of the diffraction pattern (200, 300, 400, 500) is achieved on the image sensor (108, 208, 308, 408, 508). The present invention also relates to a corresponding system (100).

FIG. 1

EP 2 809 061 A1

Printed by Jouve, 75001 PARIS (FR)

## Description

Field of the invention

The present invention generally relates to a method and corresponding system for positioning an image sensor within a camera housing.

Background of the invention

The quality of images from cameras and in particular images from monitoring and surveillance cameras has increased and the requirement of even higher quality images also increases. These requirements have, among other things, resulted in that image sensors having increased number of pixels and decreased pixel pitch are implemented in the cameras. However, in order to achieve higher quality images other features than the number of pixels and the pixel pitch should be considered.

For example, increased number of pixels and the decreased pixel pitch in image sensors makes the image capturing devices such as cameras increasingly sensitive to misalignments between the image sensor and the optics providing the image sensor with light representing the scene. In practice, the image sensor should not be tilted in relation to the optical axis of the optics of the camera as such tilt will make the focus vary over the surface of the image sensor. Moreover the image sensor of the camera has to be positioned at a correct distance from the lenses of the optics in order to ensure optimal performance from the lens. Hence, the quality from an increased number of pixels may be deteriorated if the image sensor is not mounted and aligned with high precision.

Today various different methods are used to measure the tilt of the image sensor in relation to the optical axis of the camera, i.e. the optical axis of a lens mounted to the camera. By measuring the tilt of the image sensor, conclusions regarding the misalignment of the image sensor may be drawn. The image sensor may subsequently be adjusted based on the conclusions drawn.

One method for measuring the tilt of the image sensor includes use of "golden optics", i.e. substantially flawless optics. An image of a particular target is captured using the "golden optics". Subsequently the tilt of the sensor may be determined by analyzing the captured image. In another method the tilt is measured using a microscope utilizing an extremely short depth of field in the microscope.

In yet another method a laser beam is directed onto the image sensor along the optical axis of the camera and the reflection is checked for a potential deflection from the optical axis. In other words, the deflection angle is determined. When performing the method, the lenses of the camera is removed to not influence the measurements. One general problem associated with this method is to identify the reflection from the image sensor as a plurality of reflections are created when shining a laser along the optical axis towards the image sensor. Hence it may be difficult to determine which one of the reflections that is originating from the image sensor. Further, by utilizing this method, it is not possible to determine whether the distance from the image sensor to the camera optics is correct or not. Another problem is that the surface of the image sensor is not always smooth which may result in decreased measurement accuracy.

Hence, there is a need for an improved method and system for positioning an image sensor within a camera housing.

Summary of the invention

One object of the present invention is to provide an improved method for positioning an image sensor within a camera housing.

The object is achieved by means of a method for positioning an image sensor within a camera housing according to claim 1. Further embodiments of the inventive method are presented in the dependent claims.

More specific, according to one embodiment there is provided, a method for positioning an image sensor within a camera housing, the method comprising: illuminating the image sensor with light representing a diffraction pattern, acquiring by means of the image sensor the diffraction pattern, analyzing a position and a shape of the diffraction pattern on the image sensor, adjusting the position of the image sensor in relation to the camera housing based on the position and the shape of the diffraction pattern on the image sensor such that a desired position and shape of the diffraction pattern is achieved on the image sensor.

By means of the invention it is possible to position an image sensor within a camera housing by utilizing a diffraction pattern which is acquired by the image sensor and analyzing the diffraction pattern and adjusting the position of the image sensor based on the analysis.

The present invention is based on the realization that the adjustment of the image sensor becomes more reliable by using the image sensor itself to acquire the diffraction pattern used. The use of the diffraction pattern acquired by the image sensor brings about that no additional measuring devices or sensors are needed during the positioning of the image sensor, which minimizes the risk of wrongly positioned sensors or similar. Similarly, there is a reduced risk of carrying out measurements influenced by other means used during the positioning process. This is due to the fact that the image sensor itself is the sensor used to acquire the diffraction pattern used in the analysis on which the position adjustment is based. By adjusting the diffraction pattern such that a desired position and shape of the diffraction pattern is achieved on the image sensor, the image sensor may be correctly positioned with respect to the camera housing without the need of using any other measuring devices, as the diffraction pattern acquired by the image sensor is used to determine the correct position.

It should be noted that within the context of this application the term "light representing a diffraction pattern" may be any type of light visible or non-visible having such character that when illuminating a surface, a diffraction pattern is produced on the surface.

The wording "analyzing a position and a shape of the diffraction pattern" may mean analyzing any properties related to the appearance of the diffraction pattern on the surface of the image sensor. Hence the wording may mean analyzing a size, a shape, a position etc. on the image sensor. Moreover, the actual diffraction pattern acquired by the image sensor may be filtered, enhanced or altered in any other way to facilitate the analysis.

According to one embodiment the method may further comprise providing a laser and an optical element, and illuminating the optical element with the laser such that the diffraction pattern is produced. By providing a laser and an optical element and illuminating the optical element with the laser a diffraction pattern may be realized in a simple but yet effective way.

It should be noted that within the context of this application the term "optical elements" may mean any element influencing the light illuminating the optical element such that a diffraction pattern is produced. In practice, the optical element may be an aperture, a transmission grating, a reflection grating, a slit, a dual or multiple slit, a series of apertures, an edge, a small light blocking element or similar.

In an embodiment of the method the adjusting may further comprise adjusting the position of the image sensor such that the diffraction pattern is centered on the image sensor, which is advantageous in that the image sensor may be centered with respect to the optical axis of the optics of the camera housing.

In an embodiment of the method the adjusting may further comprise adjusting the position of the image sensor such that the diffraction pattern is symmetric on the image sensor. By adjusting the image senor such that that the diffraction pattern is symmetric on the image sensor, the image sensor may be positioned such that the tilt of the sensor is counteracted.

It should be noted that within the context of this application the term "the diffraction pattern is symmetric on the image sensor" is to be construed as meaning that the diffraction pattern itself is symmetric with respect to the centre of the diffraction pattern. Hence, the diffraction pattern does not need to be symmetrically disposed on the image sensor with respect to the center of the image sensor.

In an embodiment of the method the adjusting may further comprise adjusting the position of the image sensor such that a predetermined extension of the diffraction pattern on the image sensor is achieved. By adjusting the position of the image sensor such that a predetermined extension of the diffraction pattern on the image sensor is achieved the image sensor may be positioned such that a correct distance to the image sensor within the camera housing is achieved.

In an embodiment of the method the diffraction pattern may be an Airy diffraction pattern, which is advantageous in that a distinct diffraction pattern with a plurality of detectable rings may be achieved on the image sensor.

In a further embodiment of the method the analyzing of the shape of the Airy diffraction pattern may comprise determining a major radius and a minor radius of an ellipse of the Airy diffraction pattern, and the adjusting may comprise adjusting the position of the image sensor such that the major radius and the minor radius becomes equal, such that the ellipse turns into a circle. By determining a major radius and a minor radius of an ellipse of the Airy diffraction pattern, and the adjusting the position of the image sensor such that the major radius and the minor radius becomes equal, the image sensor may be positioned such that the tilt of the image sensor is counteracted.

In an embodiment of the method the method may be performed iteratively, which is advantageous in that the accuracy of the positioning of the image sensor may be further improved by repeating the method a desired number of times. For instance, the method may be repeated a given number of times or may be repeated until a desired result is achieved, i.e. until e.g. the tilt of the image sensor is determined to be sufficiently small.

Another object of the present invention is to provide an improved system for positioning an image sensor within a camera housing. The object is achieved by means of a system for positioning an image sensor within a camera housing according to claim 9. Further embodiments of the inventive system are presented in the dependent claims. In general, features of this aspect of the invention provide similar advantages as discussed above in relation to the previous aspect of the invention.

More specific, according to one embodiment there is provided a system for positioning an image sensor within a camera housing, the system comprising: a laser, an optical element for producing a diffraction pattern on the image sensor, when the element is illuminated by the laser, the image sensor being arranged to acquire the diffraction pattern, an analyzer for analyzing the diffraction pattern acquired by the image sensor, to determine a position and a shape of the diffraction pattern on the image sensor for producing adjustment data based on the position and the shape of the diffraction pattern, and position adjustment members arranged for adjusting a position of the image sensor in relation to the camera housing, based on the adjustment data. In general, features of this aspect of the invention provide similar advantages as discussed above in relation to the previous aspect of the invention.

The wording "adjustment data" may mean any data representing information indicative of a desired position adjustment. The adjustment data may be in any digital or analog form, and may for natural reasons be represented in numerous ways depending on the needs and conditions.

According to one embodiment of the system, the optical element for producing a diffraction pattern may comprise a circular aperture for producing an Airy diffraction pattern, which is advantageous in that a distinct diffraction pattern with a plurality of detectable rings may be achieved on the image sensor in a simple manner.

According to one embodiment of the system, the optical element for producing a diffraction pattern may comprise a grating, which is advantageous in that a distinct diffraction pattern may be achieved in a simple manner.

It is to be noted that the wording "grating" may include any type of grating, including but not limited to transmission gratings and reflection gratings. Further the grating may exhibit a periodic structure in a single direction or in a plurality of directions.

According to one embodiment of the system, the analyzer may be arranged to analyze the diffraction pattern acquired by the image sensor to determine a major radius and a minor radius of an ellipse of the Airy diffraction pattern, and to produce adjustment data based on the major radius and the minor radius. By determining a major radius and a minor radius of an ellipse of the Airy diffraction pattern, and producing adjustment data based on the major radius and the minor radius, adjustment data indicative of how the image sensor shall be positioned to counteract tilt of the image sensor may be produced.

According to another embodiment of the system, the adjustment data may comprise information regarding a direction of adjustment of the image sensor in relation to the camera housing. By incorporating a direction of adjustment in the adjustment data, the direction in which the image sensor is to be adjusted in order to be correctly positioned may easily be transferred to the position adjustment members of the system.

According to an embodiment of the system, the adjustment data may comprise information regarding a magnitude of adjustment of the image sensor in relation to the camera housing. By incorporating a magnitude of adjustment in the adjustment data, the magnitude of which the image sensor is to be adjusted in order to be correctly positioned may easily be transferred to the position adjustment members of the system.

According to an embodiment of the system, the position adjustment members arranged for adjusting the position of the image sensor may comprise a stepping motor, a micro screw, a piezoelectric motor or an ultrasonic motor, which is advantageous in that the position of the image sensor may be adjusted in a well controlled and sensitive manner.

Further features of, and advantages with, the present invention will become apparent when studying the appended claims and the following description. However, it should be understood that the detailed description and specific examples, while indicating preferred embodiments of the invention, are given by way of illustration only, since various changes and modifications within the scope of the invention will become apparent to those skilled in the art from this detailed description. Hence, it is to be understood that this invention is not limited to the particular component parts of the system described or steps of the methods described as such system and method may vary. It is also to be understood that the terminology used herein is for purpose of describing particular embodiments only, and is not intended to be limiting. It must be noted that, as used in the specification and the appended claim, the articles "a," "an," and "the" are intended to mean that there are one or more of the elements unless the context clearly dictates otherwise. Thus, for example, reference to "an optical element" or "the optical element" may include several optical elements, and the like. Furthermore, the word "comprising" does not exclude other elements or steps.

Brief description of the drawings

Other features and advantages of the present invention will become apparent from the following detailed description of a presently preferred embodiment, with reference to the accompanying drawings, in which

Fig 1 is a schematic view depicting a system according to one embodiment of the invention,
Fig 2 is a schematic view of a symmetrical Airy diffraction pattern centered on an image sensor,
Fig 3 is a schematic view of an unsymmetrical Airy diffraction pattern not centered on an image sensor,
Fig 4, is a schematic view of an Airy diffraction pattern extending less on an image sensor as compared to the Airy diffraction pattern of Fig 2,
Fig 5, is a schematic view of a symmetrical diffraction pattern produced by a bidirectional grating on an image sensor,
Fig 6, is a flow chart of a method according to an embodiment of the invention.

Detailed description of embodiments

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

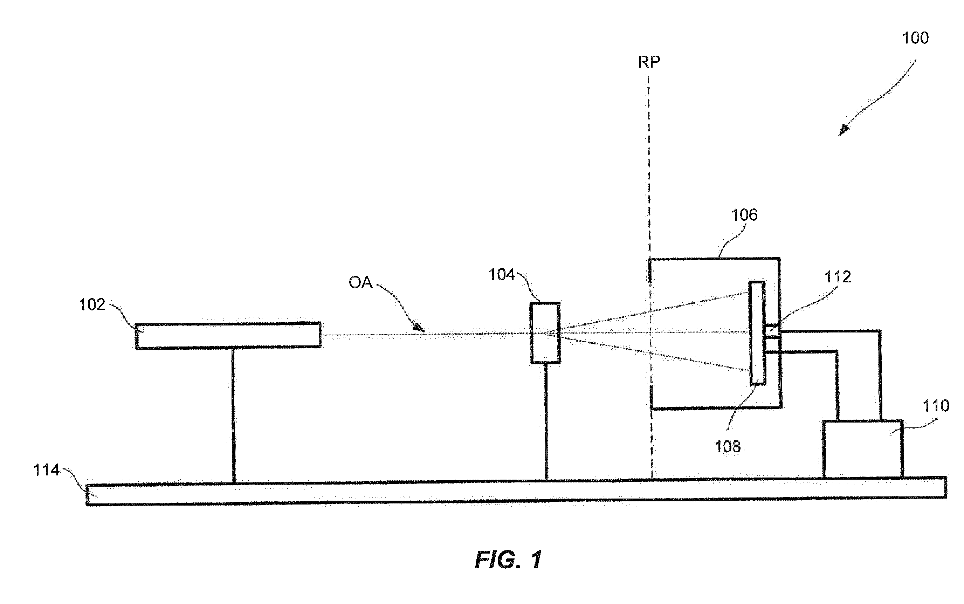

Referring now to the drawings and to Fig. 1 in particular, there is conceptually depicted a system 100 for positioning an image sensor 108 within a camera housing 106 according to an embodiment of the invention. The system 100 may advantageously be used when positioning an image sensor 108 within a camera housing 106, in conjunction to producing the camera housing 106 or camera. Generally, the image sensor 108 is correctly positioned and fixed within the camera housing 106 when the camera is produced. After having positioned the image sensor 108 correctly, the image sensor is generally fixed to the camera housing 106 using glue.

The depicted system 100 comprises a light source in form of a laser 102. E.g. a frequency doubled diode pumped solid state laser, emitting green light with a wavelength of 532 nm, could be used. A significant advantage of using a green laser is that image sensors 108 used in camera applications are generally sensitive in the green region. However, the skilled person realizes that other lasers emitting light of other wave lengths may successfully be used.

The laser 102 is illuminating an optical element 104 comprising a small circular aperture. When the laser is illuminating the small circular aperture of the optical element 104 an Airy diffraction pattern is produced. The light having passed the aperture is directed into a camera housing 106 also referred to as a camera. The camera housing 106 does not have any optics mounted and is thus comprising an opening into which the optics of the camera are to be mounted when the camera is used. The image sensor 108 present in the camera housing 106 is connected to position adjustment members 112 used for positioning the image sensor 108 within the camera housing. In other words, the position adjustment members 112 are capable of adjusting the position of the image sensor 108 in relation to the camera housing 106.

The image sensor 108 is connected to an analyzer 110 used to analyze image data as acquired by the image sensor 108. This means that the analyzer 110 connected to the image sensor 108 and is arranged to acquire an image of the diffraction pattern impinging on the image sensor 108. Further, the analyzer 110 is also connected to the position adjustment members 112 meaning that the analyzer 110 may send a signal to the position adjustment members 112 resulting in a position change of the image sensor 108. The function of the analyzer 110 will be described in more detail below in conjunction to the inventive method.

The laser 102, the optical element 104 and the camera housing 108 are all mounted on an optical bench 114. The laser 102 and the optical element 104 are aligned such that the light beam originating from the laser 102 is impinging the aperture of the optical element 104 in a centered manner, i.e. the laser 102 and the aperture are centered along the same optical axis OA. Further, the optical element 104 is so arranged that the surface comprising the aperture is perpendicular to the light beam originating from the laser 102. Hence, a standard optical alignment between the laser 102 and the optical element 104 is achieved.

According to some embodiments a collimator, not shown, may be placed between the laser 102 and the optical element 104. Additionally a pre-aperture, not shown, may be placed between the laser 102 and the optical element 104. The use of a pre-aperture will increase the coherence of the light impinging on the optical element 104 comprising the circular aperture.

The camera housing 106 comprises as discussed above an empty opening into which the optics of the camera is to be mounted. In order to be able to acquire sharp and not blurred images, the optics of the camera is to be mounted on a certain distance from the image sensor 108 positioned within the camera housing 106. For that reason, the camera housing may include a reference plane RP. The reference plane is generally made of a flat metal ring onto which the optics of the camera is pressed and secured when mounted onto the camera housing 106. Several standard mountings for optics exists such as the CS-mount and the C-mount.

Further, the camera housing 106 is aligned with the laser 102 and the optical element 104. This means that the center of the of the opening of the camera housing 106 is coinciding with the optical axis OA of the laser 102 and the aperture of the optical element 104, i.e. the optical axis OA of the system. In other words, the optical axis of the optics of the camera is coinciding with the optical axis OA of the system. Further, the reference plane RP is perpendicular to the optical axis OA. In addition to this the camera housing 106 is mounted on a specific known distance from the optical element 104. This means that the reference plane RP of the camera housing 106 is located at a specific distance from the optical element 104. The distance between the optical element 104 and the camera housing 206 comprising the image sensor 208 is of the magnitude that far field optics comes into play, meaning that effects related to near field optics may be neglected. In practice it is preferred to position the camera housing on a distance giving a sufficiently large diffraction pattern on the image sensor 108.

A thorough alignment of the laser 102, the optical element 104 and the camera housing along the optical axis OA is preferred as it facilitates positioning the image sensor 108 within the camera housing 106. Further, a well known and exact determined distance between the optical element 104 and the reference plane RP of the camera housing facilitates positioning the image sensor 108 within the camera housing 106. Hence, it is preferred to thoroughly adjust the system according to above before attempting to position the image sensor 108 within the camera housing 106, in order to not have to compensate for undesired misalignments etc.

Another alternative is to place the optical element 104 in the reference plane RP of the camera housing 106. This could potentially simplify the set up as then there is no distance between the camera housing and the optical element that needs to be determined.

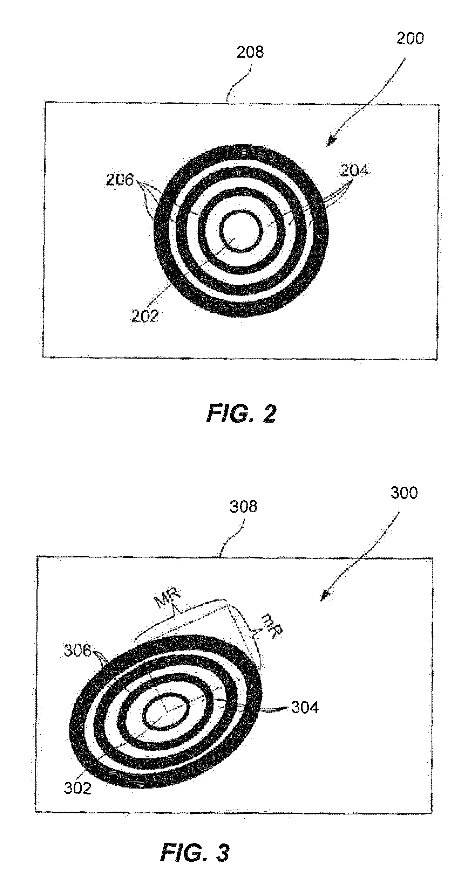

Now referring to Fig 2, an image sensor 208 is shown. The image sensor 208 is illuminated with light representing an Airy diffraction pattern 200. The Airy diffraction pattern 200 is produced by means of a laser 102 and a circular aperture as discussed above. The illumination is resulting in that an Airy diffraction pattern 200 is produced on the image sensor 208. The Airy diffraction pattern 200 is representing an Airy diffraction pattern on a correctly positioned image sensor 208.

The characteristics of the Airy diffraction pattern 200 are well known and determined by a set of well known equations. A bright spot called the Airy disc 202 is located in the center of the Airy diffraction pattern 200. The Airy disc 202 is surrounded by a number of concentric bright rings 204 rings with varying intensities. The bright rings 204 are separated from each other by dark rings 206. The locations and intensities of the bright rings 204 may be calculated using well known equations.

The Airy diffraction pattern 200 of Fig 2 is for reasons of simplicity depicted showing only the Airy disc 202 and three consecutive bright rings 204. An Airy diffraction pattern 200 is in practice comprising an indefinite number of bright rings 204 according to the mathematics describing the Airy diffraction pattern 200. However, the intensity of the rings 204 are rapidly decaying meaning that the number of rings which may be detected and resolved is dependent on the equipment used. It is to be noted that state of the art image sensors 108 are capable of resolving and detecting about 20 consecutive bright rings 204.

In order to produce the Airy diffraction pattern 200, a small circular aperture is used as discussed above. The diameter of the aperture used is affecting the diffraction pattern 200 produced. The mathematical formula for the intensities of the Airy disc 202 and the bright rings 204 are given by the well known equation

$$I(\theta) = I_0 \left( \frac{2J_1(ka\sin\theta)}{ka\sin\theta} \right)^2$$ where $I_0$ is the maximum intensity of the pattern at the Airy disc center, $J_1$ is the first order Bessel function, $k=2\pi/\lambda$ is the wave number, a is the radius of the aperture and $\theta$ is the angle of observation which is the angle between the centre of the aperture, i.e. the optical axis OA, and the line between the aperture center and an observation point.

Given the above it is thus possible to calculate the locations of the bright rings 204 or the dark rings 206 of the Airy diffraction pattern 200 on the image sensor given a known aperture size, a known distance between the aperture of the optical element 104 and the image sensor 108 and a known wave length of the laser 102. In practice, simple trigonometry may be used to determine the radius of the maxima a specific ring of the Airy diffraction pattern 200, using the angle $\theta$ and the distance between the aperture of the optical element 104 and the image sensor 108.

The depicted Airy diffraction pattern 200 on the image sensor is 208 is located in the center of the image sensor 208, meaning that the image sensor is centered with respect to the optical axis OA. An Airy diffraction pattern not being centered on the image sensor 208 implies that the image sensor 208 is not centered with respect to the optical axis OA as will be discussed below.

Further, the Airy diffraction pattern 200 on the image sensor 208 is symmetric on the image sensor 208, meaning that the image sensor is perpendicular to the optical axis OA and hence not tilted. An unsymmetrical Airy diffraction pattern 200 is indicative of a tilted sensor as will be discussed below.

Furthermore, the Airy diffraction pattern 200 on the image sensor 208 exhibits a certain size, i.e. each ring 204 exhibits a certain radius, which depends on the distance between the aperture of the optical element 104 and the image sensor 208.

Now referring to Fig 3, an image sensor 308 is shown. The image sensor 308 is illuminated with light representing an Airy diffraction pattern 300. In this case, the Airy diffraction pattern 300 is not located in the center of the image sensor 308, meaning that the image sensor is not centered with respect to the optical axis OA, i.e. the image sensor 308 is not aligned with the optical axis OA of the system 100 and consequently not correctly centered with respect to the optical axis of the optics of the camera housing 106. In order to align the image sensor 308 with the optical axis OA of the system 100 the position of image sensor 308 may be adjusted such that the Airy diffraction pattern 300 is centered on the image sensor 308. In other words, the image sensor 308 may be adjusted such that the Airy disc 302 of the Airy diffraction pattern 300 is centered on the image sensor 308 meaning that the center of the image sensor is coinciding with the optical axis OA of the system 100.

In addition to not being centered on the image sensor 308, the Airy diffraction pattern 300 is not symmetric with respect to its center, i.e. the centre of Airy disc 302. In practice the bright and dark rings 304, 306 of the Airy diffraction pattern 300 are in the form of ellipses on the image sensor 308. The fact that the rings 304 are represented by ellipses on the image sensor 308 means that the image sensor 308 is tilted with respect to the optical axis OA of the system. When a circle is projected onto an inclined flat surface, the circle will turn into an ellipse as an ellipse is mathematically defined by an intersection between a conical section and a plane. Hence, when the rings of the Airy diffraction pattern 300 is represented by ellipses the image sensor may be adjusted such that the ellipses turns into circles in order to counteract any tilt of the image sensor 308 with respect to the correctly aligned reference plane RP of the camera housing 106.

In correcting the tilt of the image sensor 308, a major radius MR and a minor radius mR of an ellipse of the Airy diffraction pattern 300 may be calculated using well known equations. In order to counteract the tilt of the image sensor 308, the image sensor 108 may then be adjusted in a direction corresponding to the calculated minor radius mR. In other words, the image sensor may tilted along the direction of the major radius MR such that the ellipse turns into a circle. Based solely on the major radius MR and the minor radius mR it is not possible to determine a direction in which the image sensor 108 shall be adjusted to counteract tilt of the image sensor 108. Put differently, it may be concluded that the image sensor 108 shall be tilted along the direction of the major radius MR but it cannot be concluded if the sensor is to be tilted e.g. clockwise or counterclockwise.

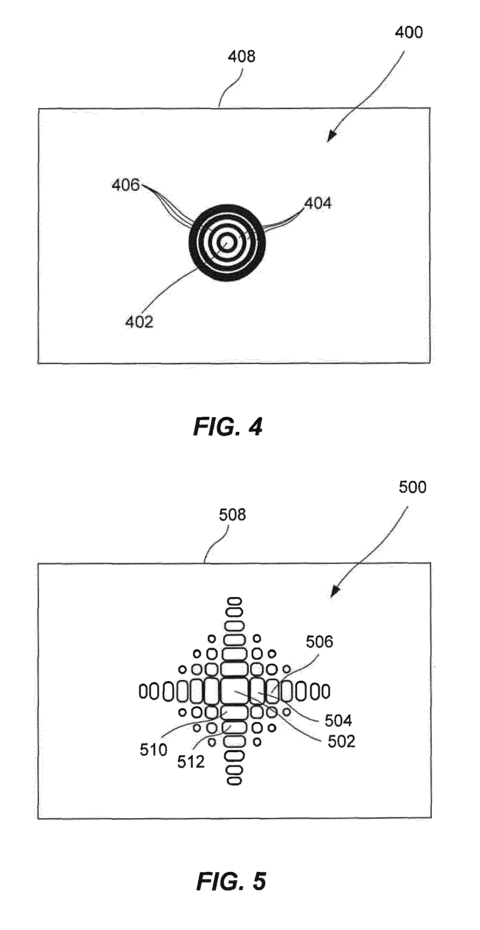

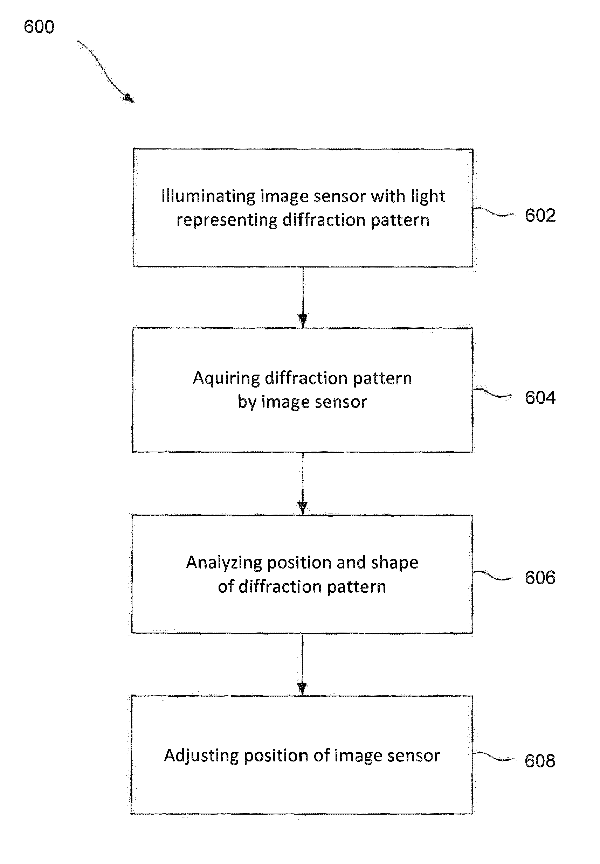

Now referring to Fig 4 an image sensor 408 is shown. The image sensor 408 is illuminated with light representing an Airy diffraction pattern 400. In this case, the Airy diffraction pattern 400 is smaller than the Airy diffraction pattern 200 of Fig 2, i.e. the radiuses of the circles of the Airy diffraction pattern 400 are smaller compared to the corresponding radiuses of the Airy diffraction pattern 200 of Fig 2. The size of the Airy diffraction pattern 400 on the image sensor 408 is dependent on the distance between the aperture of the optical element 104 and the image sensor 408. Hence, as the distance between the aperture of the optical element 104 and the reference plane RP is known and the image sensor 408 shall be positioned at a certain distance from the reference plane, the size of the Airy diffraction pattern 400 may be used to determine the correct position of the image sensor 408 with respect to the reference plane RP. As the Airy diffraction pattern 200 of Fig 2 is representing a correctly positioned sensor it may be concluded that the image sensor 408 of fig 4 is positioned too close to the reference plane RP of the camera housing 106 as the rings 404, 406 of the Airy diffraction pattern 400 is smaller than the corresponding rings of the Airy diffraction pattern 200 of fig 2. Similarly, if the Airy diffraction pattern 400 is larger than the Airy diffraction pattern 200 of Fig 2 is representing a correctly positioned sensor it may be concluded that the image sensor 408 of fig 4 is positioned too far away from the reference plane RP of the camera housing.

Now referring to fig 5, an image sensor 508 is shown. The image sensor 508 is illuminated with light representing a diffraction pattern 500 produced by a bidirectional grating. In order to produce the diffraction pattern 500 the optical element 104 may be equipped with a bidirectional grating instead of a circular aperture. By bidirectional grating is meant a grating comprising a periodic structure in two perpendicular directions.

The diffraction pattern 500 exhibits a bright spot 502 in the center of the diffraction pattern 500. Following the bright centre spot 502 a number of bright spots or maxima 504, 506, 510, 512 are present in directions corresponding to the directions of the periodic structure of the grating.

Similarly to the diffraction pattern 200 of Fig 2, a correctly positioned sensor will result in a centered, symmetric diffraction pattern of a specific size. If the image sensor 508 is not centered with respect to the OA of the system 100, the diffraction pattern 500 will appear off centered on the image sensor 508. If the image sensor 508 is tilted, the diffraction pattern 500 will no longer be symmetric with respect to its center, i.e. the bright spot 502. Further, if the image sensor 508 is positioned at an incorrect distance with respect to the grating of the optical element 104, the diffraction pattern 500 will not have the correct size, i.e. the diffraction pattern 500 will not extend on the image sensor 508 in the desired way. An image sensor 508 located too close to the grating of the optical element 104 will result in a smaller diffraction pattern 500, whereas an image sensor 508 located too far away from the grating of the optical element 104 will result in a larger diffraction pattern 500.

Hence the skilled person realizes the conclusions regarding the positioning of the image sensor 508 may be drawn in an analogous manner when using a grating as compared to using a circular aperture for producing a diffraction pattern.

In the following an embodiment method 600 for operation of the system of Fig 1 will be described schematically with reference to Fig 6, showing exemplifying steps for positioning an image sensor 108 within a camera housing 106. The method will first be presented in a generic way. Following that variations of the respective steps of the method will be discussed in greater detail.

Initially an image sensor 108 is illuminated 602 with light representing a diffraction pattern.

Following this the diffraction is acquired 604 by the image sensor 108.

The diffraction pattern is then analyzed 606 to determine a position and a shape of the diffraction pattern.

Following this, the position of the image sensor 108 is adjusted 608 in relation to the camera housing 106 based on the determined position and the determined shape of the diffraction pattern on the image sensor 108 such that a desired position and shape of the diffraction pattern is achieved on the image sensor 108. By desired position and shape of the diffraction pattern is meant a position and shape of the diffraction pattern corresponding to a desired position of the image sensor 108 in relation to the camera housing 106. Generally in practice, the desired position of the image sensor is a position where the image sensor 108 is centered with respect to the opening of the camera housing 106 into which the optics are to be inserted or mounted. In other words, the desired position is generally a position where the center of the image sensor 108 coincides with the optical axis of the optics of the camera. Further, the desired position does generally also mean that the image sensor is not tilted with respect to the reference plane RP of the camera housing 106 and is located at a specific distance with respect to the reference plane RP of the camera housing 106.

In the following it will be described how a the method 600 is used to position an image sensor 108 within a camera housing 106 using the system 100.

The system 100 is initially set up and adjusted such that the laser 102, the optical element 104 comprising a circular aperture and the reference plane RP of the camera housing 106 are aligned and not tilted as discussed above. Further, the opening of the camera housing 106 into which the optics are to mounted, is centered with respect to the optical axis OA of the system 100. Also the distance between the aperture of the optical element 104 and the reference plane RP of the camera housing 106 is adjusted to correspond to a desired predetermined distance. Hence, the system 100 is thereafter ready to be used to position the image sensor 108.

When the laser 102 is operated, the aperture of the optical element 104 is illuminated resulting in that a diffraction pattern is produced. The diffraction pattern is in this case an Airy diffraction pattern 200, 300, 400 as a circular aperture is used. The light after the aperture of the optical element 104 is thus representing an Airy diffraction pattern 200, 300, 400 which is illuminating the image sensor 108 present within the camera housing 106.

In the following, the image sensor 108 is used to acquire the Airy diffraction pattern 200, 300, 400. In other words, the image sensor 108 is used to acquire an image of the Airy diffraction pattern 200, 300, 400.

Image data representing the acquired image of the Airy diffraction pattern is then fed to the analyzer 110 which is connected to the image sensor 108.

The analyzer 110 is set up to analyze the image data as fed from the image sensor 108. The image data fed from the image sensor 108 is data representing an image acquired by the image sensor 108 and is thus generally comprising data pertaining to a number of pixels of the image acquired.

The analyzer is used to determine the centre of the Airy diffraction pattern 200, 300, 400. This may in practice be performed by determining the brightest portion of the acquired image of the Airy diffraction pattern 200, 300, 400. In practice, the pixels of the image data representing the Airy disc 202, 302, 402 of the Airy diffraction pattern 200, 300, 400 may be determined using standard image analysis methods. For instance, edge detection algorithms, such as a Sobel filter may be used to determine a pixel area representing the Airy disc 202, 302, 402 and thus the center of the Airy diffraction pattern 200, 300, 400. Similarly a circle representing the periphery of Airy disc 202, 302, 402 may be determined using for instance a Hough transform.

A center point of the determined pixel area may then be determined by the analyzer 110 using various standard methods. The determined center point of the determined pixel area is thus representative of the centre of the Airy diffraction pattern 200, 300, 400.

In the following, the image sensor 108 may be adjusted such that the determined center point of the Airy diffraction pattern 200, 300, 400 coincides with the center point of the image sensor.

The system is equipped with position adjustment members 112 used to adjust the position of the image sensor 108 I relation to the camera housing 106. Hence, the image sensor 108, may for that reason be temporarily fixed to the position adjustment members 112. According to preferred embodiments, the position adjustment members 112 may be embodied in many various ways, as long as the position adjustment members 112 are capable of adjusting the position of the image sensor 108 within the camera housing 106. Preferably, the position adjustment members 112 are constructed such that the image sensor 108 may be adjusted in all six degrees of freedom. However, the position adjustment members 112 may be embodied to only adjust the image sensor 108 in less than the maximum six degrees of freedom, without departing from the scope of the invention.

The position adjustment members 112 may for instance comprise a stepping motor, a micro screw, a piezoelectric motor or an ultrasonic motor.

In order to be able to adjust the position of the image sensor 108, the position adjustment members 112 are connected to the analyzer 110. Hence, the position adjustment members 112 are arranged to receive adjustment data from the analyzer 110 and to adjust the position of the image sensor 108 based on the adjustment data.

After having determined a center point of the Airy diffraction pattern 200, 300, 400 as described above, the analyzer 110 may then produce adjustment data indicative of an adjustment to be carried out. The adjustment data may then be sent to the position adjustment members 112 to which the analyzer 110 is connected. The position adjustment members 112 may then adjust the position of the image sensor 108 such that the centre point of the Airy diffraction pattern 200, 300, 400 coincides with the center of the image sensor. In other words, the image sensor 108 becomes centered with respect to the optical axis OA of the system and is thus correctly centered within the camera housing 106.

Following this, new image data may be acquired and fed to the analyzer 110 or the previously acquired image data may be used. The analyzer 110 is then used to analyze the image data to determine one or a plurality of the bright or dark rings 204, 206, 304, 306, 404, 406 of the Airy diffraction pattern 200, 300, 400. The rings may as discussed above be determined using standard image analysis methods such as a Sobel filter and a Hough transform. As discussed above, a state of the art image sensor may detect as much as 20 consecutive bright rings of the Airy diffraction pattern 200, 300, 400. The expected intensities of the respective bright rings 204, 304, 404 may be calculated using the above equation. Also the expected radiuses of the respective bright rings 204, 304, 404 may be calculated. It is thus possible by means of the analyzer 110 to search for an expected intensity in an expected area of the image. A Sobel filter may then be used to detect the edges of the bright rings 204, 304, 404 and the Hough transform used to identify the ring being searched for.

In practice, the edges of a ring may be determined by thresholding an inner edge and an outer edge of the ring being determined. The radius of a ring may then for instance be determined as the mean radius of the radiuses of inner edge and the outer edge.

There are advantages in detecting and determining a larger ring, i.e. a higher order ring, since a larger ring will influence a greater number of pixels as compared to a smaller ring. On the other hand, the larger ring will have a lower light intensity making it harder to detect. Given the system used, it may thus be advantageous to detect various bright rings 204, 304, 404.

As discussed above, an image sensor 108 being perpendicular to the optical axis OA of the system will result in bright rings 204, 304, 404 in the form of circles, whereas a tilted image sensor 108 will result in bright rings 204, 304, 404 in the form of ellipses. Hence, the radius of a circular ring may be represented by a single value indicative of the radius. A ring in form of an ellipse may be represented by the major radius MR and the minor radius mR and their directions.

Hence, the analyzer 110 may be set up to determine a major radius MR and a minor radius mR of the bright ring 304 being determined using standard mathematical methods. Following this, the analyzer 110 may produce adjustment data indicative of the tilt adjustment to be carried out. The adjustment data may then be sent to the position adjustment members 112, which may adjust the position of the image sensor 108 accordingly. As discussed above, the image sensor 108 may be adjusted along the minor radius mR. The amount of adjustment may be calculated from the difference of the lengths of the major radius MR and the minor radius mR. However, the direction, e.g. clockwise or counterclockwise, cannot be calculated and must thus be experimentally determined by e.g. adjusting in one direction and determining if the tilt is counteracted or not.

Following this, new image data may be acquired and fed to the analyzer 110 or the previously acquired image data may be used. The analyzer 110 may then be used to analyze the extension i.e. the size of the Airy diffraction pattern 200, 300, 400 on the image sensor 108. When the distance between the aperture of the optical element 104 and the image sensor is correct the Airy diffraction pattern 200, 300, 400 on the image sensor 108 will have a specific size, as discussed above. By determining the radius of one or a plurality of bright or dark rings 204, 206, 304, 306, 404, 406 of the Airy diffraction pattern 200, 300, 400 it is thus possible to determine whether the image sensor is positioned at a correct distance from the reference plane RP of the camera housing 106, given that the position between the aperture of the optical element 104 and the reference plane RP of the camera housing 106 is known. Hence, the analyzer 110 may be set up to determine the radius of one or a plurality of bright rings 204, 304, 404 in accordance to what has been discussed above.

Following this, the analyzer 110 may produce adjustment data indicative of the distance adjustment to be carried out. The adjustment data may then be sent to the position adjustment members 112, which may adjust the position of the image sensor 108 accordingly.

After having carried out the above steps, the image sensor 108 within the camera housing may thus be correctly positioned in terms of centricity, tilt and distance. The image sensor may then be permanently fixed to the camera hosing in the correct position using e.g. a glue and then released from the position adjustment members 112.

Further, the skilled person realizes that the analyzer 110 may be embodied in many different forms without departing from the scope of the invention. Just to give a few examples, the analyzer 110 may be embodied in form of a processer executing a program adapted to perform the above. The analyzer 110 may alternatively be embodied in form of a dedicated hardware performing the above. Further, the skilled person realizes that the analyzer 110 may be located in proximity to the other components of the system 100 or that the analyzer 110 may be located remote form the other components of the system 100. In case of a remotely located analyzer 110 various ways of e.g. feeding the image data as acquired by the image sensor 108 or sending adjustment data may be used. Both wired connections and wireless connections may be used.

The system 100 may be used in a similar manner when a bidirectional grating is used as the optical element 104 instead of an optical element 104 comprising a circular aperture.

In this case the image sensor will acquire a diffraction pattern 500 similar to the schematic pattern of Fig 5.

By analyzing the acquired diffraction pattern 500 by the analyzer 110, adjustment data may be produced. The adjustment data may then be sent to the position adjustment members 112 which may be used to adjust the position of the image sensor 108.

Similarly to what has been described above, the center of the diffraction pattern 500 may be determined by determining the center of a region 502 having the highest light intensity, or, in other words, the center of the so called Airy disc. The analyzer may then produce adjustment data which may be sent to the position adjustment members 112 in on order to adjust the position of the image sensor 108 such that the diffraction pattern 500 is centered on the image sensor 108.

Similarly to what has been described above, also the tilt of the image sensor 108 may be adjusted by determining how the image sensor 108 is tilted with respect to the optical axis OA of the system 100. In this case the distance to a single or a plurality of the respective first 504, 510, second 506, 512, and consecutive maxima may be calculated by the analyzer 110. The calculated distances for the respective maxima is then compared in order to determine a difference in distance on the image sensor 108. The analyzer 110 may then produce adjustment data based on the difference in distance on the image sensor 108. A larger distance to a corresponding maxima is indicative of a tilt in the direction of the larger distance. Using a bidirectional grating, also the shape of e.g. the central maxima 504 may be used to determine a tilt of the image sensor 108, as the central maxima 504 will become symmetric when the image sensor 108 is not tilted. The analyzer may thus produce adjustment data which may be sent to the position adjustment members 112 in on order to adjust the position of the image sensor 108 such that the diffraction pattern 500 is symmetric on the image sensor 108.

Similarly to what has been described above, also the distance to the image sensor 108 may be adjusted by determining the extension, i.e. the size of the diffraction pattern 500 on the image sensor 108. The analyzer 110 may thus produce adjustment data indicative of the distance adjustment to be carried out. The adjustment data may then be sent to the position adjustment members 112, which may adjust the position of the image sensor 108 accordingly.

Additionally the rotation of the image sensor 108 with respect to the camera housing 106 may be adjusted when using a bidirectional grating as the optical element 104, given that the rotation of the grating is known. This is due to the fact that the locations of the respective first 504, 510, second 506, 512, and consecutive maxima on the image sensor 108 may be determined. As discussed above, the locations of the respective maxima corresponds to the directions of the periodic structure of the grating. Hence, the analyzer 110 may additionally produce adjustment data indicative of a rotation adjustment to be carried out. The adjustment data may then be sent to the position adjustment members 112, which may adjust the rotation of the image sensor 108 accordingly.

The skilled person realizes that the method 600 or some of the method steps may be performed iteratively to enhance the accuracy of the method 600. For instance, the method 600 may be performed and the position of the image sensor 108 may be adjusted such that tilt of the image sensor 108 is counteracted. Following this, new image data may be acquired and method repeated based on the newly acquired image data. By doing so, a more accurate positioning of the image sensor 108 may be achieved.

Further, the skilled person realizes that the above method 600 may be performed automatically as have been described above or may be performed manually. For instance, the image data as acquired by the image sensor may be presented on a monitor. An operator may then adjust the diffraction pattern 200, 300, 400, 500 on the image sensor by manually adjusting the position of the image sensor 108. By doing so the operator may adjust the position until a desired diffraction pattern 200, 300, 400, 500 is achieved on the image sensor 108. The desired pattern is then indicative of a correctly positioned images sensor 108.

Furthermore, the skilled person realizes that some of the method steps may be automated while others are carried out manually by an operator without departing from the scope of the invention.

Although the figures may show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Additionally, even though the invention has been described with reference to specific exemplifying embodiments thereof, many different alterations, modifications and the like will become apparent for those skilled in the art. Variations to the disclosed embodiments may be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

**Claims**

1. Method (600) for positioning an image sensor (108, 208, 308, 408, 508) within a camera housing (106), the method comprising:

   illuminating (602) the image sensor (108, 208, 308, 408, 508) with light representing a diffraction pattern (200, 300, 400, 500),
   acquiring (604) by means of the image sensor (108, 208, 308, 408, 508) the diffraction pattern (200, 300, 400, 500),
   analyzing (606) a position and a shape of the diffraction pattern (200, 300, 400, 500) on the image sensor (108, 208, 308, 408, 508),
   adjusting (608) the position of the image sensor (108, 208, 308, 408, 508) in relation to the camera housing (106) based on the position and the shape of the diffraction pattern (200, 300, 400, 500) on the image sensor (108, 208, 308, 408, 508) such that a desired position and shape of the diffraction pattern (200, 300, 400, 500) is achieved on the image sensor (108, 208, 308, 408, 508).

2. Method (600) according to claim 1, wherein the method further comprises,
   providing a laser (102) and an optical element (104), illuminating the optical element (104) with the laser (102) such that the diffraction pattern (200, 300, 400, 500) is produced.

3. Method (600) according to claim 1 or 2, wherein the adjusting (608) further comprises adjusting the position of the image sensor (108, 208, 308, 408, 508) such that the diffraction pattern (200, 300, 400, 500) is centered on the image sensor (108, 208, 308, 408, 508).

4. Method (600) according to any one of claims 1-3, wherein the adjusting (608) further comprises adjusting the position of the image sensor (108, 208, 308, 408, 508) such that the diffraction pattern (200, 300, 400, 500) is symmetric on the image sensor (108, 208, 308, 408, 508).

5. Method (600) according to any one of claims 1-4, wherein the adjusting (608) further comprises adjusting the position of the image sensor (108, 208, 308, 408, 508) such that a predetermined extension of the diffraction pattern (200, 300, 400, 500) on the image sensor (108, 208, 308, 408, 508) is achieved.

6. Method (600) according to any one of claims 1-5, wherein the diffraction pattern (200, 300, 400, 500) is an Airy diffraction pattern (200, 300, 400).

7. Method (600) according to claim 6, wherein the analyzing of the shape of the Airy diffraction pattern (200, 300, 400) comprises determining a major radius (MR) and a minor radius (mR) of an ellipse of the Airy diffraction pattern (200, 300, 400), and wherein the adjusting (608) comprises adjusting the position of the image sensor (108, 208, 308, 408) such that the major radius (MR) and the minor radius (mR) becomes equal, such that the ellipse turns into a circle.

8. Method (600) according to any one of claims 1-7, wherein the method is performed iteratively.

9. System (100) for positioning an image sensor (108, 208, 308, 408, 508) within a camera housing (106), the system comprising:

   a laser (102),
   an optical element (104) for producing a diffraction pattern (200, 300, 400, 500) on the image sensor (108, 208, 308, 408, 508), when the optical element (104) is illuminated by the laser (102), the image sensor (108, 208, 308, 408, 508) being arranged to acquire the diffraction pattern (200, 300, 400, 500),
   an analyzer (110) for analyzing the diffraction pattern (200, 300, 400, 500) acquired by the image sensor (108, 208, 308, 408, 508), to determine a position and a shape of the diffraction pattern (200, 300, 400, 500) on the image sensor (108, 208, 308, 408, 508) for producing adjustment data based on the position and the shape of the diffraction pattern (200, 300, 400, 500), and
   position adjustment members (112) arranged for adjusting a position of the image sensor (108, 208, 308, 408, 508) in relation to the camera housing (106), based on the adjustment data.

10. System (100) according to claim 9, wherein the optical element (104) for producing a diffraction pattern (200, 300, 400, 500) comprises a circular aperture for producing an Airy diffraction pattern (200, 300, 400).

11. System (100) according to claim 9 or 10, wherein the optical element (104) for producing a diffraction pattern (200, 300, 400, 500) comprises a grating.

12. System (100) according to claim 10, wherein the analyzer (110) is arranged to analyze the diffraction pattern (200, 300, 400, 500) acquired by the image sensor (108, 208, 308, 408, 508) to determine a major radius (MR) and a minor radius (mR) of an ellipse of the Airy diffraction pattern (200, 300, 400), and to produce adjustment data based on the major radius (MR) and the minor radius (mR).

13. System (100) according to any one of claims 9-12, wherein the adjustment data comprises information regarding a direction of adjustment of the image sensor (108, 208, 308, 408, 508) in relation to the camera housing (106).

14. System (100) according to any one of claims 9-13, wherein the adjustment data comprises information regarding a magnitude of adjustment of the image sensor (108, 208, 308, 408, 508) in relation to the camera housing (106).

15. System (100) according to any one of claims 9-14, wherein the position adjustment members (112) arranged for adjusting the position of the image sensor (108, 208, 308, 408, 508) comprises a stepping motor, a micro screw, a piezoelectric motor or an ultrasonic motor.

EP 2 809 061 A1

**FIG. 1**

**FIG. 2**

**FIG. 3**

EP 2 809 061 A1

FIG. 4

FIG. 5

14

600

Illuminating image sensor with light
representing diffraction pattern — 602

Aquiring diffraction pattern
by image sensor — 604

Analyzing position and shape
of diffraction pattern — 606

Adjusting position of image sensor — 608

Europäisches
Patentamt

European
Patent Office

Office européen
des brevets

# EUROPEAN SEARCH REPORT

Application Number

EP 13 16 9342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 341 213 A (GIROUX BRIAN W [US]) 23 August 1994 (1994-08-23) | 1-5,8,9, 11,13-15 | INV. H04N5/225 |
| Y | * the whole document * | 6,7,10, 12 | H04N17/00 |
| Y | US 2010/253810 A1 (POVLICK TIMOTHY R [US] ET AL) 7 October 2010 (2010-10-07) | 6,7,10, 12 | |
| A | * the whole document * | 1-5,8,9, 11,13-15 | |

TECHNICAL FIELDS
SEARCHED     (IPC)

H04N

The present search report has been drawn up for all claims

| Place of search | Date of completion of the search | Examiner |
|---|---|---|
| Munich | 25 September 2013 | Doswald, Daniel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 13 16 9342

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2013

| Patent document cited in search report | | Publication date | Patent family member(s) | Publication date |
|---|---|---|---|---|
| US 5341213 | A | 23-08-1994 | NONE | |
| US 2010253810 | A1 | 07-10-2010 | NONE | |